# EUROPÄISCHE PATENTSCHRIFT

(11) **EP 3 132 299 B1**
(45) Veröffentlichungstag und Bekanntmachung des Hinweises auf die Patenterteilung: **06.11.2024**
(21) Anmeldenummer: 15716807.1
(22) Anmeldetag: 16.04.2015
(51) Int. Cl.: G02B 21/00

(54) **LICHTRASTERMIKROSKOP MIT VEREINFACHTER OPTIK, INSBESONDERE MIT VERÄNDERLICHER PUPILLENLAGE**
LIGHT SCANNING MICROSCOPE WITH SIMPLIFIED OPTICAL SYSTEM, MORE PARTICULARLY WITH VARIABLE PUPIL POSITION
MICROSCOPE À BALAYAGE LUMINEUX AVEC OPTIQUE SIMPLIFIÉE, EN PARTICULIER AVEC POSITION DE PUPILLE MODIFIABLE

(30) Priorität: 17.04.2014 DE 102014005880
(43) Veröffentlichungstag der Anmeldung: 22.02.2017
(73) Patentinhaber: Carl Zeiss AG, 73447 Oberkochen (DE); Carl Zeiss Microscopy GmbH, 07745 Jena (DE)
(72) Erfinder: WALD, Matthias, 07751 Jena (DE); BÖHME, Beate, 07751 Grosspürschütz (DE); SCHWEDT, Daniel, 99423 Weimar (DE); ANHUT, Tiemo, 07743 Jena (DE)
(74) Vertreter: Loritz, Rainer
(86) Internationale Anmeldenummer: PCT/EP2015/058328
(87) Internationale Veröffentlichungsnummer: WO 2015/158861

(56) Entgegenhaltungen:
- WO-A1-2013/045078
- DE-A1- 102005 013 949
- US-A1- 2007 253 057
- US-A1- 2009 174 935

## Beschreibung

Die Erfindung betrifft ein Lichtrastermikroskop mit einem optischen System, welches einen Beleuchtungsstrahlengang definiert und folgende Bauteile umfasst: eine Lichtquelle, die eine räumlich begrenzte Lichtverteilung bereitstellt, ein Mikroskopobjektiv mit einer (lichtquellenseitigen) Pupillenebene und einem (objektseitigen) Fokus, eine Abtastungsoptik (engl. "scan lens" oder auch "scan optics") zum Erzeugen einer zu der Pupillenebene des Mikroskopobjektivs konjugierten Pupillenebene und eine (hinsichtlich der Ablenkrichtung) variabel einstellbare Strahlablenkeinheit (zum Verschieben des Fokus quer zu einer optischen Achse des Mikroskopobjektivs), wobei der Beleuchtungsstrahlengang mindestens einen Punkt der Lichtverteilung und einen Punkt des Fokus aufeinander abbildet, wobei die Strahlablenkeinheit (optisch zwischen der Lichtverteilung und der Abtastungsoptik) in der konjugierten Pupillenebene angeordnet ist und optisch zwischen dem Mikroskopobjektiv und der Abtastungsoptik ein Zwischenbild liegt.

Die Erfindung betrifft außerdem ein Lichtrastermikroskop mit einem optischen System, welches einen Detektionsstrahlengang definiert und folgende Bauteile umfasst: ein Mikroskopobjektiv mit einer (Austritts-) Pupillenebene und einem (objektseitigen) Fokus, eine Abtastungsoptik zum Erzeugen einer zu der Pupillenebene des Mikroskopobjektivs konjugierten Pupillenebene, eine (hinsichtlich der Ablenkrichtung) variabel einstellbare Strahlablenkeinheit, einen optoelektronischen Wandler, wobei der Detektionsstrahlengang mindestens einen Punkt des Fokus und mindestens einen jeweiligen Punkt des Wandlers aufeinander abbildet, wobei die (reflektierende Oberfläche der) Strahlablenkeinheit (optisch zwischen der Abtastungsoptik und dem Wandler) in der konjugierten Pupillenebene angeordnet ist und optisch zwischen dem Mikroskopobjektiv und der Abtastungsoptik ein Zwischenbild liegt.

Die Erfindung betrifft außerdem gleichartige Lichtrastermikroskope, bei denen die Abtastungsoptik aus dem ersten Zwischenbild kommende Strahlenbündel auf herkömmliche Weise kollimiert.

Im Sinne der Erfindung ist Licht jede mit optischen Mitteln manipulierbare elektromagnetische Strahlung, insbesondere einschließlich infraroter und ultravioletter Strahlung. Die Lichtquelle kann zur Bereitstellung der Lichtverteilung insbesondere einen Lichtwellenieiter und/oder einen Strahlformer umfassen. Zudem kann sie einen Intensitätsmodulator umfassen. Der optoelektronische Wandler kann insbesondere eine mit dem Fokus des Mikroskopobjektivs konfokale Blende umfassen. Die Ablenkeinheit wird auch als Scanner bezeichnet.

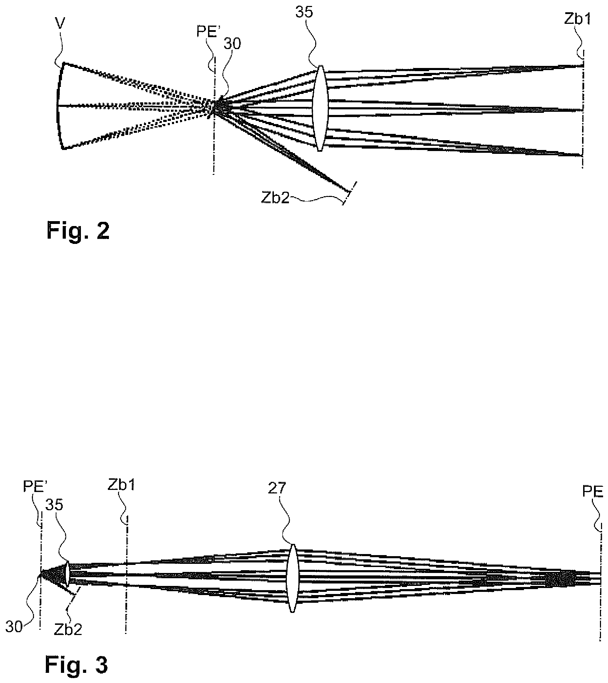

Im Stand der Technik sind solche Lichtrastermikroskope beispielsweise aus "Confocal Scanning Optical Microscopy and Related Imaging Systems" von T. R. Code und G. S. Kino (Academic Press, 1996, Abschnitt 2.2.7, Fig. 2.2) bekannt. Darin wird die Abtastungsoptik als "scan objective" bezeichnet. Sie stellt eine kollimierte konjugierte Pupillenebene am Ort der Ablenkeinheit bereit. Die Kombination von Abtastungsoptik und Tubuslinse wird als Transferoptik bezeichnet.

In WO 90/00755 A1 ist darüber hinaus eine zweite variabel einstellbare Strahlablenkeinheit in einer weiteren Pupillenebene angeordnet, die mittels einer aus Hohlspiegeln bestehenden Übertragungsoptik erzeugt wird. Eine entsprechende Anordnung mit mikroelektromechanischem Antrieb der Ablenkeinheit ist beispielsweise aus US 2013/107338 A1 bekannt.

Die Anordnung der Ablenkeinheit(en) in einer (jeweiligen) konjugierten Objektivpupille ermöglicht vorteilhafterweise die Bereitstellung eines ruhenden Strahlquerschnitts in weiteren konjugierten Pupillen. Dadurch sind wie in US 2003/230710 A1 oder in WO 2008/037346 A1 Manipulationen der Wellenfront mit hoher Genauigkeit möglich. Zudem ist auf diese Weise die Randstrahlabblendung durch Vignettierungen an den Optiken minimal. Weiterer Stand der Technik findet sich in US 2009/174935 A1 und DE 10 2005 013949 A1.

Die beschriebenen Lichtrastermikroskope haben jedoch den Nachteil, dass die Abtastungsoptik, die zur Erzeugung der konjugierten Pupillenebene benötigt wird, aufwendig und nicht lichteffizient ist, da sie unterschiedliche Abbildungsfehler wie Bildfeldwölbung und Farbquerfehler kompensieren muss, um eine hohe Abbildungsqualität zu ermöglichen. Zudem ist aufgrund des geringen Abstands der konjugierten Pupillenebene von der Abtastungsoptik der für die Ablenkeinheit verfügbare Bauraum klein.

Der Erfindung liegt die Aufgabe zugrunde, ein Mikroskop der eingangs genannten Art zu verbessern, so dass die Abtastungsoptik einfacher ausgestaltet sein kann und ein größerer Bauraum für die Ablenkeinheit bereitgestellt werden kann.

Die Aufgabe wird gelöst durch ein Lichtrastermikroskop, welches die in Anspruch 1 angegebenen Merkmale aufweist.

Vorteilhafte Ausgestaltungen der Erfindung sind in den Unteransprüchen angegeben.

Erfindungsgemäß ist vorgesehen, dass die Abtastungsoptik ein zweites Zwischenbild über die (reflektierende Oberfläche der) Strahlablenkeinheit in das erste Zwischenbild abbildet beziehungsweise dass die Abtastungsoptik das erste Zwischenbild über die (reflektierende Oberfläche der) Strahlablenkeinheit in das zweite Zwischenbild abbildet, wobei in beiden Fällen das zweite Zwischenbild räumlich gekrümmt ist. Die (reflektierende Oberfläche der) Ablenkeinheit ist damit im Gegensatz zum Stand der Technik nicht mehr in einem kollimierten, sondern in einem konvergenten Abschnitt des Detektionsstrahlengangs angeordnet. Hinter der Strahlablenkeinheit liegt aufgrund der Reflexion an der reflektierenden Oberfläche der Ablenkeinheit ein virtuelles Objekt. Die räumliche Krümmung des Zwischenbildes erlaubt die Bereitstellung der konjugierten Pupillenebene mittels einer gegenüber herkömmlichen, kollimierenden Abtastobjektiven deutlich vereinfachten Abtastungsoptik, insbesondere ohne Korrektur der Bildfeldwölbung, bei dennoch gleicher Abbildungsqualität des gesamten optischen Systems. Dabei können insbesondere die bisher zur Ebnung üblichen (feldnahen) Linsen mit negativer Brennweite/Brechkraft (W. J. Smith: "Modern Lens design", McGraw-Hill, 1992, Kapitel 22, Seite 411) entfallen. Eine solche Abtastungsoptik braucht in ihren optischen Eigenschaften und ihrer Güte eher lediglich einem Okular als einem herkömmlichen Abtastobjektiv zu entsprechen. Der Krümmungsradius des zweiten Zwischenbildes entspricht dann vorzugsweise dem Abstand zwischen der Ablenkeinheit und der Fokusposition des ersten Zwischenbilds. Zusätzlich kann auch die Korrektur des Farbquerfehlers im Sinne eines Kompensationssystems auf die Abtastungsoptik und die Tubuslinse aufgeteilt werden, was eine weitere Vereinfachung der Abtastungsoptik bedeutet. Das Mikroskop kann zweckmäßigerweise so ausgebildet sein, dass die Abtastungsoptik und die Tubuslinse einander hinsichtlich des Farbquerfehlers kompensieren.

Besonders vorteilhaft ist diese Anordnung bei nichtlinearer Wechselwirkung der Anregungsstrahlung mit der Probe. Hier führt die quadratische (im Falle der Zwei-Photonenanregung) oder kubische Abhängigkeit (im Falle der Anregung der dritten Harmonischen oder der Drei-Photonenanregung) der Lichtemission in der Probe von der Intensität bei herkömmlicher Anordnung mehrerer Strahlablenkeinheiten in einer jeweiligen Pupille derart, dass die Ablenkeinheiten nicht aufeinander abgebildet werden, zu Problemen in der Bildfeldausleuchtung. Der physikalische Abstand der Ablenkeinheiten vor dem Scanobjektiv wird mit der axialen Vergrößerung, die quadratisch mit der lateralen Vergrößerung zunimmt, in die Objektivpupille abgebildet. Das führt zu einer nichtstationären Pupille, die in einer feldabhängigen Anregungsintensität resultiert. Diese Probleme in der nichtlinearen Optik (NLO) können durch die Anordnung der Strahlablenkeinheit in einer nichtkollimierten Pupille vermieden werden, da hierdurch eine gute Abbildung der Ablenkeinheiten aufeinander in einer lichteffizienten Anordnung möglich wird. Typischerweise erfolgt die Detektion der Fluoreszenz hier nicht über die Strahlablenkeinheit, sondern bereits vorher im sogenannten "nicht-descannten" Strahlengangabschnitt. Da die Anordnung aber genauso in Anregungsrichtung wirkt wie in Detektionsrichtung, wird auch in diesem Fall die saubere Abbildung der Pupillen erzielt.

Vorzugsweise ist das zweite Zwischenbild sphärisch gekrümmt oder zumindest im wesentlichen sphärisch gekrümmt, insbesondere mit einem Krümmungsradius zwischen der einfachen Brennweite und der doppelten Brennweite der Abtastungsoptik. Vorzugsweise ist der Krümmungsradius des Zwischenbildes identisch mit einem Abstand zwischen (einem Mittelpunkt der reflektierenden Oberfläche) der Ablenkeinheit und dem zweiten Zwischenbild.

Vorteilhafterweise kann ein Krümmungsmittelpunkt des zweiten Zwischenbildes in einer Strahlablenkungseinheit liegen, insbesondere auf einer reflektierenden Oberfläche der betreffenden Strahlablenkungseinheit.

Das Lichtrastermikroskop kann zweckmäßigerweise eine Beleuchtungsoptik zum Abbilden der Lichtverteilung in ein Zwischenbild, insbesondere in das zweite Zwischenbild oder in ein drittes oder weiteres Zwischenbild, undloder eine Detektionsoptik zum Abbilden eines Zwischenbildes, insbesondere des zweiten Zwischenbildes oder eines dritten oder weiteren Zwischenbildes, auf den Wandler umfassen.

Insbesondere kann das optische System einen Strahlteiler umfassen, der so im Beleuchtungsstrahlengang und im Detektionsstrahlengang angeordnet ist, dass aus dem Fokus kommendes Licht zum optoelektronischen Wandler hin aus dem Beleuchtungsstrahlengang ausgekoppelt wird.

Zweckmäßigerweise kann das optische System (im Beleuchtungsstrahlengang beziehungsweise im Detektionsstrahlengang) auf einer von der Abtastungsoptik abgewandten Seite der Strahlablenkeinheit eine Kollimationsoptik umfassen. Auf diese Weise sind weitere Manipulationen an den Strahlen und die finale Detektion mit geringem Aufwand möglich.

Vorzugsweise ist optisch zwischen der Strahlablenkeinheit und der Lichtquelle oder dem Wandler, insbesondere als Kollimationsoptik, (genau) ein Hohlspiegel angeordnet, dessen Krümmungsmittelpunkt in der konjugierten Pupillenebene liegt. Der Hohlspiegel wirkt achromatisch. Auf diese Weise kann mit geringem optischem Aufwand, insbesondere einer geringen Anzahl von Grenzflächen, eine weitere konjugierte Pupillenebene bereitgestellt werden. Durch die Anordnung des Hohlspiegels im Abstand seines Krümmungsradius von der ersten konjugierten Pupille kann eine hochgenaue Abbildung in derselben Entfernung unabhängig vom Feldwinkel (über ein gekrümmtes zweites Zwischenbild) bereitgestellt werden.

Vorteilhafterweise kann ein Krümmungsradius R_{H} des Hohlspiegels doppelt so groß wie ein Krümmungsradius R_{ZB} des zweiten Zwischenbilds sein, so dass nach dem Hohlspiegel (wandlerseitig) ebene Wellenfronten vorliegen. Auf diese Weise liegt die zweite konjugierte Pupille in einem kollimierten Strahlengangabschnitt und die Strahldurchmesser in den beiden konjugierten Pupillen ist gleich. Zweckmäßigerweise ist der Hohlspiegel dann so angeordnet, dass aus dem Fokus des Mikroskopobjektivs (durch das zweite Zwischenbild) kommende Strahlen nach dem Hohlspiegel parallel zueinander, vorzugsweise auch parallel zu einer Ebene, innerhalb derer die erste Ablenkeinheit einfallendes Licht ablenken kann, verlaufen und gegenüber einer Mittelachse des Hohlspiegels geneigt sind. Der Abstand A zwischen Hohlspiegel und dem gekrümmten Zwischenbild ist dann gleich dem Radius des Zwischenbildes R_{H}: R_{H}=2·R_{ZB}=2·A. In Verbindung mit dem gekrümmten zweiten Zwischenbild ist so eine besonders hohe Abbildungsqualität des optischen Systems mit geringem Aufwand möglich. Es können nach dem Hohlspiegel aber auch von Null verschiedene Wellenfrontkrümmungen vorliegen, wenn der Hohlspiegel-Krümmungsradius R_{H} vom Doppelten des Zwischenbild-Radius R_{ZB} um eine Differenz D abweicht. Für den Hohlspiegel-Radius R_{H}=2·R_{ZB}+D beträgt der Abstand A zwischen Hohlspiegel und Zwischenbild A=R_{ZB}+D und die zweite Ablenkeinheit ist im Krümmungsmittelpunkt des Hohlspiegels, also im Abstand R_{H} von diesem angeordnet. Weiterhin können die Strahldurchmesser auf der ersten Strahlablenkeinheit und auf der zweiten Strahlablenkeinheit ungleich sein, beispielsweise bei einem Abbildungsmaßstab ungleich 1:1.

Der Krümmungsradius R_{H} des Hohlspiegels kann jedoch auch vom Doppelten des Krümmungsradius R_{ZB} des Zwischenbildes abweichen. Ein Hohlspiegel des Krümmungsradius R_{H}=A wird dann im Abstand A/2 vom gekrümmten Zwischenbild angeordnet, so daß das Licht auf der optischen Achse (wenn die Strahlablenkeinheiten in ihrer Mittelstellung stehen) kollimiert wird, und das Licht außerhalb leicht divergent oder konvergent verläuft

Vorzugsweise weist der Hohlspiegel, insbesondere seine reflektierende Oberfläche, eine torische Form (Oberflächenform eines Torusschnittes) auf, wobei die Erfindung auch andere Formen umfasst. Dadurch kann der aus schrägem Einfall resultierende Astigmatismus verringert werden. Vorzugsweise weist der Hohlspiegel dabei einen ersten Krümmungsradius, der um einen Faktor Cos(Einfallswinkel) kleiner als das Doppelte des Krümmungsradius des Zwischenbilds ist, und einen zweiten Krümmungsradius, der um den Faktor Cos(Einfallswinkel) größer als das Doppelte des Krümmungsradius des Zwischenbilds ist, auf. Vorzugsweise verläuft die zum ersten Krümmungsradius gehörige erste Krümmung um eine Achse, die parallel zu einer Drehachse der ersten Strahlablenkeinheit ist, und die zum zweiten Krümmungsradius gehörige Krümmung orthogonal zur ersten Krümmung.

Ein zweiter Aspekt der Erfindung betrifft ein Lichtrastermikroskop der eingangs genannten Art, bei dem die Abtastungsoptik aus dem ersten Zwischenbild kommende und aus dem Fokus stammende Strahlenbündel wie im Stand der Technik kollimiert. Er löst die Aufgabe, die Lage einer konjugierten Objektivpupille relativ zur Strahlablenkeinheit einstellen zu können. Unter diesem Aspekt sieht die Erfindung vor, dass optisch zwischen der Strahlablenkeinheit und dem Wandler oder der Lichtquelle eine Sammeloptik angeordnet ist, die das von der Strahlablenkeinheit kommende kollimierte Strahlenbündel in ein zweites Zwischenbild fokussiert, wobei die Abtastungsoptik und die Sammeloptik entlang einer optischen Achse des Detektionsstrahlengangs verschiebbar sind. Die Abtastungsoptik und die Sammeloptik bilden dabei eine endliche Übertragungsoptik. Die Verschiebbarkeit ermöglicht dabei die oben beschriebenen Vorteile der Anpassbarkeit an unterschiedliche Mikroskopobjektive, allerdings ist wie im Stand der Technik die Korrektur von Wölbungs- und Farbquerfehlern zweckmäßig. Es kann ein elektrischer Antrieb zur Verschiebung der Abtastungsoptik und/oder der Sammeloptik vorgesehen sein. Insbesondere kann es sich dabei um separate Antriebe für Abtastungsoptik und Sammeloptik handeln. Dabei kann eine Steuereinheit vorgesehen sein, die dazu eingerichtet ist, die Abtastungsoptik und die Sammeloptik gleichgerichtet, insbesondere gleich weit, insbesondere synchron oder simultan, zu verschieben.

Nachfolgend werden vorteilhafte Ausführungsformen beschrieben, die in allen Aspekten der Erfindung einsetzbar sein.

In bevorzugten Ausführungsformen ist in einer weiteren konjugierten Pupillenebene zwischen der ersten Strahlablenkeinheit und dem Wandler eine zweite variabel einstellbare Strahlablenkeinheit oder ein variabel einstellbarer Wellenfrontmodulator, beispielsweise wie in WO 2008/037346 A1, angeordnet. Die weitere konjugierte Pupillenebene kann insbesondere die zweite, von einem Hohlspiegel erzeugte Pupillenebene oder eine dritte sein. Die zweite Strahlablenkeinheit kann eine Drehachse aufweisen, die von einer Drehachse der ersten Strahlablenkeinheit verschieden ist. Dadurch kann probenseitig ein zweidimensionales Feld abgetastet werden. Alternativ kann die Drehachse der zweiten Strahlablenkeinheit parallel zu einer Drehachse der ersten Strahlablenkeinheit sein. Dadurch kann eine der beiden Strahlablenkeinheiten zur Grobeinstellung und die andere zur Feineinstellung der Strahlablenkung dienen. Darüber hinaus kann bereits die erste Strahlablenkeinheit, optional auch die zweite Strahlablenkeinheit, eine variable Ablenkung in zwei Dimensionen bereitstellen. Alternativ können in vorteilhaften Ausführungsformen beide Strahlablenkeinheiten jeweils ausschließlich um genau eine jeweilige Drehachse verstellbar sein, insbesondere mit voneinander verschiedenen Antrieben oder mit gleichen Antrieben und unterschiedlicher Betriebsart. Beispielsweise können beide Strahlablenkeinheiten als Galvanometerscanner ausgebildet sein, wovon nur einer in resonanter Schwingung betrieben wird.

Beispielsweise kann genau eine der beiden Strahlablenkeinheiten einen resonant schwingenden Spiegel ("Resonanz-Scanner") umfassen. Auf diese Weise kann mittels des resonant schwingenden Spiegels eine Linie auf der Probe abgetastet werden, die mittels der anderen Strahlablenkeinheit zusätzlich längs oder quer oder, bei zweidimensionaler Einstellbarkeit, längs und quer abgetastet werden kann.

Mittels des Wellenfrontmodulators ist innerhalb des von ihm bereitgestellten maximalen Modulationshubes eine Verstellung der probenseitigen Fokalebene längs der optischen Achse (in z-Richtung) und damit ein Rastern einer Probe in der Tiefe möglich. In Verbindung mit einer zweidimensional variablen ersten Strahlablenkeinheit ermöglicht das eine dreidimensionale Verschiebung des Messorts und damit ein dreidimensionales Abrastern der Probe. Alternativ zur Verschiebung des Fokus längs der optischen Achse können mittels eines ortsaufgelöst einstellbaren Wellenfrontmodulators auch ortsabhängige Abbildungsfehler, die beispielsweise aus lokalen Variationen einer oder mehrerer Probeneigenschaften herrühren, kompensiert werden.

Zu diesem Zweck kann das Lichtrastermikroskop eine Steuereinheit umfassen, die mindestens ein Bild einer Probe aufnimmt und anhand mindestens einer vorgegebenen, das Bild beeinflussenden Eigenschaft der Probe, insbesondere einer tatsächlichen Verteilung einer Eigenschaft in der Probe, und anhand des Bildes Stellwerte für den Wellenfrontmodulator ermittelt (und den Wellenfrontmodulator entsprechend einstellt). Insbesondere kann die Steuereinheit anhand des Bildes eine gemessene Verteilung der Probeneigenschaft ermitteln und die Stellwerte derart ermitteln, dass eine Abweichung zwischen der gemessenen Verteilung und der tatsächlichen Verteilung minimal ist, beispielsweise mittels einer Ausgleichsrechnung.

Erfindungsgemäss sind Ausgestaltungen, in denen ein Teil der oder die gesamte Abtastungsoptik entlang einer optischen Achse des Detektionsstrahlengangs verschiebbar ist. Sie können insbesondere einen elektrischen Antrieb zur Verschiebung des verschiebbaren Teils oder der gesamten Abtastungsoptik umfassen. Durch die axiale Verschiebung kann mit geringem Aufwand die Lage der konjugierten Pupille relativ zur ersten Ablenkeinheit eingestellt werden, wohingegen bisher die Lage des Abtastobjektivs nur einmalig zu Justierung der Fokuslage und damit zur Justierung der Kollimation auf der Strahlablenkeinheit eingestellt und fixiert wurde. Dadurch kann insbesondere eine Pupillenschiebung, die beispielsweise beim Wechsel des Mikroskopobjektivs auftritt, kompensiert werden. Die axiale Lage der konjugierten Pupille variiert dabei mit dem Quadrat des Abbildungsmaßstabs zwischen erster Ablenkeinheit und Objektivpupille. Die Fokuslage in der Zwischenbildebene und damit auch in der Objektebene bleibt dabei weitgehend erhalten.

Erfindungsgemäss ist die Abtastungsoptik so ausgebildet, dass ihre Abbildung (vom ersten Zwischenbild in das zweite Zwischenbild) einen Vergrößerungsfaktor zwischen 0,8 und 1,2, vorzugsweise insbesondere zwischen 0,9 und 1,1, insbesondere von genau 1, aufweist. Auf diese Weise bleibt die Lage des ersten Zwischenbildes und damit die probenseitige Fokalebene mit hoher Genauigkeit konstant. Am besten bleibt der Fokus bei einer 1:1-Abbildung der Abtastungsoptik vom virtuellen Objekt bis zum ersten Zwischenbild erhalten (parabelförmiger Verlauf der Fokusablage).

Vorteilhaft sind Ausführungsformen, in denen das Mikroskopobjektiv entlang der optischen Achse verschiebbar und/oder in einem Objektivwechsler angeordnet ist, insbesondere umfassend einen elektrischen Antrieb zur Verschiebung des Mikroskopobjektivs und/oder zum Wechseln des Mikroskopobjektivs. Dadurch wird in Verbindung mit der Anpassbarkeit an die unterschiedlichen Pupillenlage verschiedener Objektive eine große Flexibilität bei der Messung bei gleichbleibend hoher Abbildungsqualität ermöglicht.

Vorzugsweise weisen die erste Strahlablenkeinheit und/oder die zweite Strahlablenkeinheit zur Einstellung der Strahlablenkung ein mikroelektromechanisches System auf. Dieses kann wie in US 7,295,726 B1 eine Drehbarkeit um zwei verschiedene Achsen bereitstellen, insbesondere mit Lage des (ortsfesten) Schnittpunkts dieser Achsen in einer reflektierenden (den von der Abtastungsoptik kommenden Strahl ablenkenden) Oberfläche, insbesondere mit Anordnung dieses Schnittpunkts auf der optischen Achse des Detektionsstrahlengangs. MEMS-basierte Scanner weisen eine signifikant geringere Spiegelmasse auf und haben dadurch den Vorteil, schnell in beliebiger Weise und mit hoher Genauigkeit verkippt werden zu können. Beispielsweise kann die eine Strahlablenkeinheit ein ausschließlich um genau eine Drehachse verstellbarer MEMS-basierter Spiegel und die andere Strahlablenkeinheit ein Galvanometerscanner sein. Dabei kann der Galvanometerscanner auch resonant betrieben werden.

Die Erfindung umfasst insbesondere auch Lichtrastermikroskope mit einer Lichtquelle, deren Licht mittels eines im Detektionsstrahlengang angeordneten Strahlteilers über die erste Strahlablenkeinheit optisch in das Mikroskopobjektiv einkoppelbar oder eingekoppelt ist. Die Lichtquelle ist zweckmäßigerweise ein Laser. Es kann sich beispielsweise um einen durchstimmbaren Laser handeln.

Nachfolgend wird die Erfindung anhand von Ausführungsbeispielen näher erläutert.

In den Zeichnungen zeigen:
Fig. 1 ein Lichtrastermikroskop,
Fig. 2 eine vereinfachte Abtastungsoptik als Abtastobjektiv,
Fig. 3 eine vollständige Transferoptik,
Fig. 4 eine erweiterte Transferoptik mit zusätzlicher Pupillenebene und
Fig. 5 eine Abtastoptik mit endlicher Übertragungsoptik.

In allen Zeichnungen tragen übereinstimmende Teile gleiche Bezugszeichen.

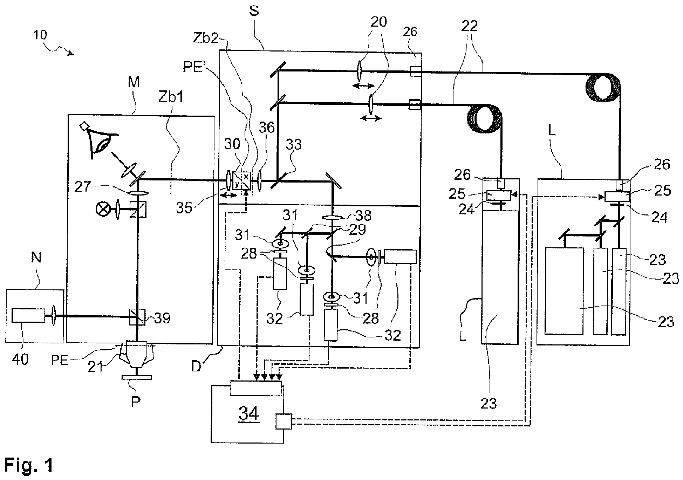

**Fig. 1** ist eine schematische Darstellung eines Lichtrastermikroskops 10 ("LSM"), das mittels einer Steuereinheit 34 gesteuert wird. Das LSM 10 ist modular aus zwei Beleuchtungsmodulen L mit Lasern 23, einem Abtastmodul S (engl. "scanning module"), einem Detektionsmodul D und der Mikroskopeinheit M mit dem Mikroskopobjektiv 21 zusammengesetzt. Die Mikroskopeinheit M verfügt beispielsweise über einen Objektivrevolver zum Einschwenken unterschiedlicher Mikroskopobjektive 21.

Das Licht der Laser 23 kann durch Lichtklappen 24 und Abschwächer 25 von der Steuereinheit 34 beeinflusst werden, bevor es über Lichtleitfasern 22 und Koppeloptiken 20, beispielsweise in Form von Kollimationsoptiken, in die Abtasteinheit S eingespeist und vereinigt wird. Jeder Laser 23 zusammen mit den Optiken bis hin zu der jeweiligen Lichtleitfaser 22 kann als eine jeweilige Lichtquelle angesehen werden, die am Ende der betreffenden Lichtleitfaser 22 eine konfokale, punktförmige Lichtverteilung bereitstellt, die in die Probe P abgebildet wird.

Über den Hauptstrahlteiler 33 und die in X- und Y-Richtung variabel einstellbare Strahlablenkeinheit 30, die einen einzelnen Spiegel mit MEMS-Antrieb (nicht dargestellt) aufweist, gelangt das Anregungslicht zum Mikroskopobjektiv 21, welches das Licht in der Probe P in den Messort (nicht abgebildet) fokussiert. Von der Probe P rückgestreutes Anregungslicht oder emittiertes Fluoreszenzlicht gelangt durch das Mikroskopobjektiv 21, die Tubuslinse 27 und die Abtastungsoptik 35 über die Ablenkeinheit 30 durch die Kollimationsoptik 36 und den Hauptstrahlteiler 30 in das Detektionsmodul D. Zur Fluoreszenzdetektion kann der Hauptstrahlteiler 30 beispielsweise als dichroitischer Farbteiler ("Hauptfarbteiler") ausgebildet sein, so dass das rückgestreute Anregungslicht in Richtung der Laser 23 ausgespiegelt wird.

Das Detektionsmodul D weist nach einer Detektionsoptik 38, beispielsweise einer Sammellinse, mehrere Detektionskanäle mit jeweils einer Lochblende 31, einem Filter 28 und einem Photovervielfacher 32 als optoelektronischen Wandler auf, die durch Farbteiler 29 ("Nebenfarbteiler") spektral separiert sind. Anstelle von Lochblenden 31 können, beispielsweise bei linienförmiger Beleuchtung, auch Schlitzblenden (nicht abgebildet) verwendet werden. Die Detektionsoptik 38 fokussiert die bis dahin kollimierten Strahlenbündel auf die konfokalen Lochblenden 31. Die konfokalen Loch- oder Schlitzblenden 31 dienen der Diskriminierung von Probenlicht, das nicht aus dem Fokusvolumen am Messort stammt. Die Photovervielfacher 32 detektieren daher ausschließlich Licht aus dem Fokusvolumen und definieren so den Messort in der Probe P, von dem Licht aufgenommen und am Detektionsort in der jeweiligen lichtempfindlichen Schicht der Photovervielfacher 32 nachgewiesen wird. Alternativ können auch andere lichtempfindliche, aus dem Stand der Technik bekannte Sensoren wie Lawinendioden (engl. "avalanche diodes") verwendet werden.

Das konfokal beleuchtete und aufgenommene Messvolumen der Probe P kann mittels der Ablenkeinheit 30 über die Probe P bewegt werden, um pixelweise ein Bild aufzunehmen, indem der MEMS-Spiegel der Ablenkeinheit 30 gezielt verdreht wird. Sowohl die Bewegung des MEMS-Spiegels 30 als auch das Schalten der Beleuchtung mittels der Lichtklappen 24 oder der Abschwächer 25 werden unmittelbar von der Steuereinheit 34 gesteuert. Die Datenaufnahme von den Photovervielfachern 32 erfolgt durch die Steuereinheit 34.

Das Mikroskopobjektiv 21 weist eine unendliche Ausgangsschnittweite auf, so dass bis zur Tubuslinse 27 beispielsweise ein kollimierter Strahlengang vorliegt. Innerhalb des Mikroskopobjektivs 21 liegt dessen (Austritts-) Pupillenebene PE. Die Tubusoptik 27 erzeugt ein erstes Zwischenbild Zb1, das von der Abtastungsoptik 35 in ein zweites Zwischenbild Zb2 abgebildet wird. Die zur Pupillenebene PE konjugierte Pupillenebene PE' liegt auf der Strahlablenkeinheit 30. Die Strahlablenkeinheit 30 liegt dadurch in einem konvergenten Abschnitt des Detektionsstrahlengangs. Die Kollimationsoptik 36 bildet das zweite Zwischenbild Zb2 anschließend nach unendlich ab, so dass am Hauptstrahlteiler 33 ausschließlich kollimierte Strahlenbündel vorliegen. In alternativen Ausführungsformen (nicht abgebildet) können am Hauptstrahlteiler 33 konvergente oder divergente Strahlenbündel vorliegen. Die Koppeloptiken 20 im Abtastmodul S und die Detektionsoptik 29 ist dann entsprechend anzupassen.

Die Abtastungsoptik 35 ist beispielsweise mittels eines Antriebs längs der optischen Achse des vereinigten Detektions- und Beleuchtungsstrahlengangs verschieblich. Damit kann die Lage der konjugierten Pupillenebene PE' auch bei einer Änderung der Pupillenebene PE im Falle eines Wechsels oder einer axialen Verschiebung des Mikroskopobjektivs 21 axial auf der Strahlablenkeinheit 30 gehalten werden.

An einen von einem Strahlteiler 39 (auch als "NLO-Strahlteiler" bezeichnet) bereitgestellten zusätzlichen Ausgang ist ein Modul N ("NLO-Detektionsmodul") zur Detektion von Fluoreszenz nach nichtlinearer Wechselwirkung bei der Anregung angeschlossen. Es ist möglich, das NLO-Detektionsmodul N alternativ oder zusätzlich zum Detektionsmodul D anzuschließen und zur Messung zu verwenden. In alternativen Ausführungsformen (nicht abgebildet) kann alternativ oder zusätzlich zum NLO-Detektionsmodul N auf der entgegengesetzten Seite der Probe ein eigenständiges NLO-Detektionsmodul mit eigenem Mikroskopobjektiv angeordnet sein und zur Detektion genutzt werden.

In **Fig. 2** sind die Strahlengänge um die Abtastungsoptik 35, die ein herkömmliches aufwendiges Abtastobjektiv ersetzt, indem sie das erste Zwischenbild Zb1 in ein zweites Zwischenbild Zb2 abbildet, im Detail für drei verschiedene Stellungen der Strahlablenkeinheit 30 dargestellt. Die Abtastungsoptik 35 ist frei von einer Bildfeldwölbungskorrektur und weist einen Abbildungsmaßstab von 1:1 auf. Anhand des virtuellen Objekts V hinter der in der konjugierten Pupille PE' angeordneten Strahlablenkeinheit 30 ist erkennbar, dass das zweite Zwischenbild Zb2 räumlich gekrümmt ist.

**Fig. 3** zeigt die vollständige Transferoptik, die neben der Abtastungsoptik 35 und der Strahlablenkeinheit 30 aus Fig. 2 auch eine Tubusoptik 27 umfasst. Die Strahlengänge von der eigentlichen Pupillenebene PE des Mikroskopobjektivs (hier nicht dargestellt) bis zum zweiten Zwischenbild Zb2 sind wiederum für drei verschiedene Stellungen der Ablenkeinheit 30 dargestellt. Die Tubusoptik 27 fokussiert die aus der Pupille PE kommenden kollimierten Strahlenbündel in das erste Zwischenbild Zb1, welches die Abtastungsoptik 35 über die Strahlablenkeinheit 30, die in der konjugierten Pupille PE' angeordnet ist, in das räumlich gekrümmte zweite Zwischenbild Zb2 abbildet.

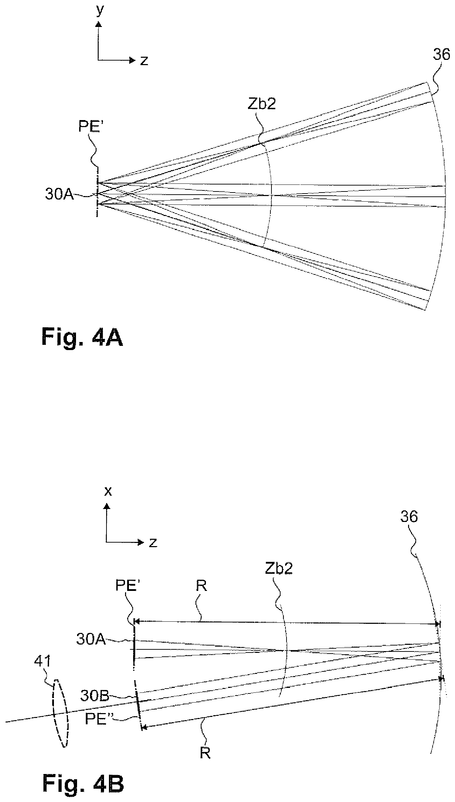

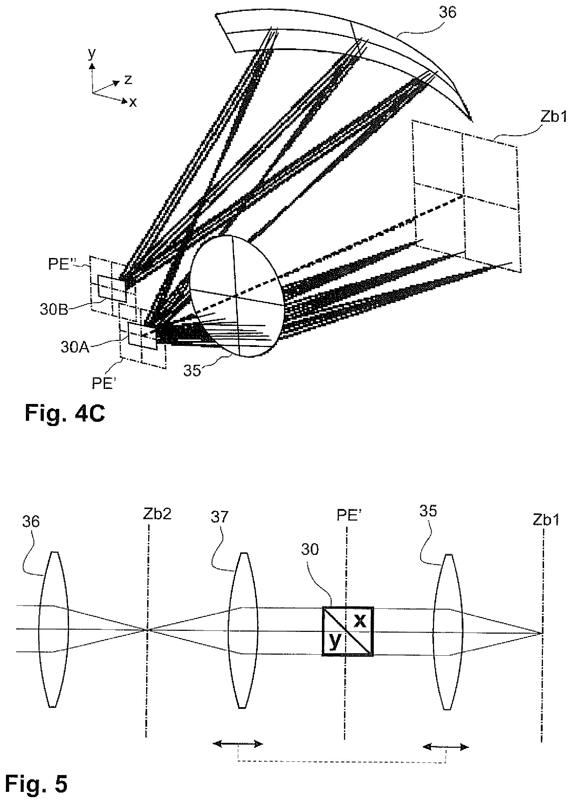

In **Fig. 4** ist in drei verschiedenen Ansichten (Fig. 4A, 4B, 4C) eine erweiterte Transferoptik mit einer zweiten konjugierten Pupillenebene PE" und einer zweiten variabel einstellbaren Strahlablenkeinheit 30B dargestellt. Diese erweiterte Transferoptik ersetzt beispielsweise die aus der Literatur bekannten afokalen Übertragungsoptiken (engl. "afocal relay optics") nach Kessler wie beispielsweise in US 2010/0208319 A1 oder WO 90/00755 A1 beschrieben.

Die erste Strahlablenkeinheit 30A ist beispielsweise ein einzelner Spiegel mit MEMS-Antrieb, der um zwei zueinander orthogonale, feststehende Achsen drehbar ist. Der ortsfeste Drehpunkt des Spiegels liegt in der reflektierenden Oberfläche des Spiegels auf der optischen Achse der Transferoptik. Die zweite Strahlablenkeinheit 30A ist beispielsweise ein einzelner Spiegel mit Galvanometerantrieb, weist also nur genau eine Drehachse auf. Er kann beispielsweise in resonanter Schwingung betrieben werden. Alternativ können auch in beiden konjugierten Pupillenebenen PE' und PE" Galvanometer-Strahlablenkeinheiten eingesetzt werden, von denen eine das Licht in der Probe in x-Richtung, und der andere in y-Richtung bewegen kann.

Die zusätzliche Pupillenebene PE" wird durch eine Kollimationsoptik 36 bereitgestellt, die beispielsweise als torischer Hohlspiegel ausgeführt und optisch zwischen der ersten Strahlablenkeinheit 30A und der zweiten Strahlablenkeinheit 30B angeordnet ist. Der erste Krümmungsmittelpunkt des Hohlspiegels liegt in der ersten konjugierten Pupillenebene PE' auf der reflektierenden Oberfläche der ersten Strahlablenkeinheit 30A (Abstand R zwischen Hohlspiegel und konjugierter Pupille PE') und der zugehörige Krümmungsradius des Hohlspiegels ist doppelt so groß wie der Krümmungsradius des zweiten Zwischenbilds Zb2. Dadurch liegt einerseits (im identischen Abstand R) in der zweiten konjugierten Pupille PE" unabhängig vom jeweiligen Feldwinkel eine perfekte, ebene Abbildung der ersten konjugierten Pupille PE' vor und andererseits sind die Strahlen in der zweiten konjugierten Pupille PE" kollimiert, so dass dort ebene Wellenfronten vorliegen. Dadurch ist die Handhabung der Strahlen im weiteren Verlauf des Detektionsstrahlengangs einfach. In alternativen Ausführungsformen (nicht abgebildet) können die Krümmungsradien von Hohlspiegel und zweitem Zwischenbild voneinander abweichen, so dass in der zweiten Pupille PE" nichtebene Wellenfronten vorliegen.

Da der Hohlspiegel 36 bei senkrechtem Lichteinfall die erste konjugierte Pupille PE' auf sich selbst abbilden würde, ist er senkrecht zu der Ebene, in der die zweite Strahlablenkeinheit 30B wirkt, verkippt. Durch den schrägen Einfall auf den Hohlspiegel erzeugt dieser Astigmatismus, was durch die torische Form maximal kompensiert wird. Zu diesem Zweck ist der Krümmungsradius entlang der y-Achse gegenüber dem Krümmungsradius des zweiten Zwischenbilds Zb2 um den Faktor cos(Einfallswinkel) verkleinert und der Krümmungsradius entlang der x-Achse gegenüber dem Krümmungsradius des zweiten Zwischenbilds Zb2 um denselben Faktor vergrößert.

Anstelle der zweiten Strahlablenkeinheit 30B kann in der zweiten konjugierten Pupillenebene PE" oder vorzugsweise in einer dritten konjugierten Pupillenebene (nicht abgebildet) ein Wellenfrontmodulator 30B angeordnet sein.

Alternativ zur torischen Form kann der Hohlspiegel 36 eine sphärische Form aufweisen, in der erster und zweiter Krümmungsmittelpunk identisch sind. Dann kann auf der von der Abtastungsoptik 35 abgewandten Seite des Hohlspiegels 36 eine Zylinderoptik 41, beispielsweise in Form einer schwachen Zylinderlinse, zur Kompensation des aus dem schrägen Einfall auf den Hohlspiegel 36 resultierenden Astigmatismus angeordnet sein. Vorzugsweise kann die Zylinderoptik 41 auf der von der Abtastungsoptik 35 abgewandten Seite der zweiten Strahlablenkeinheit 30B, also im sogenannten "descannten" Strahlengangabschnitt, angeordnet sein. Bei torischem Hohlspiegel 36 kann die Zylinderoptik 41 entfallen.

Ist die erste Strahlablenkeinheit zweidimensional, also zur Ablenkung in x-Richtung und y-Richtung, einstellbar, so kann die Kollimationsoptik beispielsweise eine einfache Linse sein.

Schließlich zeigt **Fig. 5** eine alternative Transferoptik. Im Bereich der Strahlablenkeinheit 30, die in einer konjugierten Pupillenebene PE' angeordnet ist, sind die Strahlenbündel wie im Stand der Technik kollimiert. Die Abtastungsoptik 35 und die der Strahlablenkeinheit 30 nachgeordnete Sammeloptik 37 bilden eine endliche Übertragungsoptik, die das erste Zwischenbild Zb1 in das zweite Zwischenbild Zb2 abbildet. Im weiteren Verlauf ist eine Kollimationsoptik 36 angeordnet, so dass am Hauptstrahlteiler 33 beispielsweise kollimierte Strahlenbündel vorliegen. In anderen Ausführungsformen (nicht abgebildet) können mehrere Hauptstahlteiler beispielsweise erst nach einer weiteren Sammeloptik folgen.

Zur Anpassung der Pupillenschiebung beim Wechsel oder beim Verschieben des Mikroskopobjektivs 21 sind die Abtastungsoptik 35 und die Sammeloptik 37 axial verschieblich. Die Verschiebung beider Optiken 35/37 ist mittels einer Steuereinheit beispielsweise stets gleichgerichtet und gleich weit, optional auch synchron durchführbar.

Die beschriebene Anordnung der Strahlablenkeinheit in einem nichtkollimierten Strahlengangabschnitt kann für weitere Anwendungen genutzt werden, beispielsweise zur optischen Manipulation der Probe oder zum Ablenken von Strahlen, die mittels einer Strahlformungsoptik, beispielsweise einem räumlichen Lichtmodulator (engl. "Spatial Light Modulator"; SLM), erzeugt werden, beispielsweise Besselstrahlen oder Mathieustrahlen.

In alternativen Ausführungsformen (nicht abgebildet) kann der objektseitige Fokus eine von der Punktform abweichende Form aufweisen. Beispielsweise kann er linienförmig sein.

### Bezugszeichenliste

- 10: Lichtrastermikroskop
- 20: Koppeloptik
- 21: Mikroskopobjektiv
- 22: Lichtleitfaser
- 23: Laser
- 24: Lichtklappe
- 25: Abschwächer
- 26: Faserkoppler
- 27: Tubuslinse
- 28: Filter
- 29: Farbteiler
- 30: Strahlablenkeinheit
- 31: Blende
- 32: Photovervielfacher
- 33: Hauptstrahlteiler
- 34: Steuereinheit
- 35: Abtastungsoptik
- 36: Kollimationsoptik
- 37: Sammeloptik
- 38: Detektionsoptik
- 39: NLO-Strahlteiler
- 40: NLO-Detektor
- 41: Zylinderoptik
- D: Detektionsmodul
- L: Beleuchtungsmodul
- M: Mikroskopeinheit
- N: NLO-Detektionsmodul
- P: Probe
- PE('/"): (konjugierte) Pupillenebene
- R: Abstand
- S: Scanmodul
- V: Virtuelles Objekt
- Zb1/2: Zwischenbildebene

## Patentansprüche

1. Lichtrastermikroskop (10) mit einem optischen System, welches einen Beleuchtungsstrahlengang definiert und folgende Bauteile umfasst:
- eine Lichtquelle (22, 23, 24,25, 26), die eine räumlich begrenzte Lichtverteilung bereitstellt,
- ein Mikroskopobjektiv (21) mit einer Pupillenebene (PE) und einem Fokus,
- eine Abtastungsoptik (35) zum Erzeugen einer zu der Pupillenebene (PE) des Mikroskopobjektivs (21) konjugierten Pupillenebene (PE') und
- eine variabel einstellbare Strahlablenkeinheit (30, 30A),
wobei der Beleuchtungsstrahlengang mindestens einen Punkt der Lichtverteilung und mindestens einen jeweiligen Punkt des Fokus aufeinander abbildet, wobei die Strahlablenkeinheit (30, 30A) in der konjugierten Pupillenebene (PE') angeordnet ist und optisch zwischen dem Mikroskopobjektiv (21) und der Abtastungsoptik (35) ein Zwischenbild (Zb1) liegt, **und wobei** die Abtastungsoptik (35) ein zweites Zwischenbild (Zb2) über die Strahlablenkeinheit (30, 30A) in das erste Zwischenbild (Zb1) abbildet, wobei das zweite Zwischenbild (Zb2) räumlich gekrümmt ist, **dadurch gekennzeichnet, dass** ein Teil der oder die gesamte Abtastungsoptik (35) entlang einer optischen Achse des Detektionsstrahlengangs verschiebbar ist, so dass die Lage der konjugierten Pupille relativ zur ersten Ablenkeinheit eingestellt werden kann, wobei die Abbildung der Abtastungsoptik (35) einen Vergrößerungsfaktor zwischen 0,8 und 1,2 aufweist.

2. Lichtrastermikroskop (10) nach dem vorhergehenden Anspruch, wobei ein Krümmungsmittelpunkt des zweiten Zwischenbildes (Zb2) in einer Strahlablenkungseinheit (30, 30A, 30B) liegt, insbesondere auf einer reflektierenden Oberfläche der betreffenden Strahlablenkungseinheit.

3. Lichtrastermikroskop (10) nach dem Anspruch 1 oder 2, umfassend eine Beleuchtungsoptik (20, 36) zum Abbilden der Lichtverteilung in ein Zwischenbild, insbesondere in das zweite Zwischenbild (Zb2) oder in ein drittes oder weiteres Zwischenbild.

4. Lichtrastermikroskop (10) mit einem optischen System, welches einen Detektionsstrahlengang definiert und folgende Bauteile umfasst:
- ein Mikroskopobjektiv (21) mit einer Pupillenebene (PE) und einem Fokus,
- eine Abtastungsoptik (35) zum Erzeugen einer zu der Pupillenebene (PE) des Mikroskopobjektivs (21) konjugierten Pupillenebene (PE'),
- eine variabel einstellbare Strahlablenkeinheit (30, 30A),
- einen optoelektronischen Wandler (31, 32),
wobei der Detektionsstrahlengang mindestens einen Punkt des Fokus und mindestens einen jeweiligen Punkt des Wandlers (31, 32) aufeinander abbildet, wobei die Strahlablenkeinheit (30, 30A) in der konjugierten Pupillenebene (PE') angeordnet ist und optisch zwischen dem Mikroskopobjektiv (21) und der Abtastungsoptik (35) ein Zwischenbild (Zb1) liegt, **und wobei** die Abtastungsoptik (35) das erste Zwischenbild (Zb1) über die Strahlablenkeinheit (30, 30A) in ein zweites Zwischenbild (Zb2) abbildet, wobei das zweite Zwischenbild (Zb2) räumlich gekrümmt ist, **dadurch gekennzeichnet, dass** ein Teil der oder die gesamte Abtastungsoptik (35) entlang einer optischen Achse des Detektionsstrahlengangs verschiebbar ist, so dass die Lage der konjugierten Pupille relativ zur ersten Ablenkeinheit eingestellt werden, wobei die Abbildung der Abtastungsoptik (35) einen Vergrößerungsfaktor zwischen 0,8 und 1,2 aufweist.

5. Lichtrastermikroskop (10) nach dem vorhergehenden Anspruch, wobei ein Krümmungsmittelpunkt des zweiten Zwischenbildes (Zb2) in einer Strahlablenkungseinheit (30, 30A, 30B) liegt, insbesondere auf einer reflektierenden Oberfläche der betreffenden Strahlablenkungseinheit.

6. Lichtrastermikroskop (10) nach Anspruch 4 oder 5, umfassend eine Detektionsoptik (36, 38) zum Abbilden eines Zwischenbildes, insbesondere des zweiten Zwischenbildes (Zb2) oder eines dritten oder weiteren Zwischenbildes, auf den Wandler.

7. Lichtrastermikroskop (10) nach Anspruch 1 bis 3 und Anspruch 4 bis 6, wobei das optische System einen Strahlteiler (33) umfasst, der so im Beleuchtungsstrahlengang und im Detektionsstrahlengang angeordnet ist, dass aus dem Fokus kommendes Licht zum optoelektronischen Wandler (31, 32) hin aus dem Beleuchtungsstrahlengang ausgekoppelt wird.

8. Lichtrastermikroskop (10) nach einem vorhergehenden Ansprüche, wobei das zweite Zwischenbild sphärisch gekrümmt oder zumindest im wesentlichen sphärisch gekrümmt ist, insbesondere mit einem Krümmungsradius zwischen der einfachen Brennweite und der doppelten Brennweite der Abtastungsoptik.

9. Lichtrastermikroskop (10) nach einem der vorhergehenden Ansprüche, wobei das optische System [im Beleuchtungsstrahlengang/Detektionsstrahlengang] auf einer von der Abtastungsoptik (35) abgewandten Seite der Strahlablenkeinheit (30, 30A) eine Kollimationsoptik (36) umfasst, die einen parallelen Strahlengangabschnitt bereitstellt.

10. Lichtrastermikroskop (10) nach einem der vorhergehenden Ansprüche, wobei optisch zwischen der Strahlablenkeinheit (30, 30A) und der Lichtquelle (23) oder dem Wandler (32), insbesondere als Kollimationsoptik (36), ein Hohlspiegel angeordnet ist, dessen Krümmungsmittelpunkt in der konjugierten Pupillenebene (PE') liegt.

11. Lichtrastermikroskop (10) nach dem vorhergehenden Anspruch, wobei ein Krümmungsradius des Hohlspiegels doppelt so groß wie ein Krümmungsradius des zweiten Zwischenbilds ist.

12. Lichtrastermikroskop (10) nach einem der vorhergehenden Ansprüche, umfassend einen elektrischen Antrieb zur Verschiebung des verschiebbaren Teils oder der gesamten Abtastungsoptik (35).

13. Lichtrastermikroskop (10) nach einem der vorhergehenden Ansprüche, wobei die Abbildung der Abtastungsoptik (35) einen Vergrößerungsfaktor zwischen 0,9 und 1,1, aufweist, insbesondere von genau 1 aufweist.

## Claims

1. Light-scanning microscope (10) having an optical system defining an illumination beam path and comprising the following components:
- a light source (22, 23, 24, 25, 26) providing a spatially delimited light distribution,
- a microscope objective (21) with a pupil plane (PE) and a focus,
- a scan optical unit (35) for creating a pupil plane (PE') conjugate to the pupil plane (PE) of the microscope objective (21), and
- a variably settable beam deflection unit (30, 30A), wherein the illumination beam path images at least one point of the light distribution and at least one respective point of the focus on one another, wherein the beam deflection unit (30, 30A) is arranged in the conjugate pupil plane (PE'), and an intermediate image (Zb1) lies optically between the microscope objective (21) and the scan optical unit (35), **and wherein** the scan optical unit (35) images a second intermediate image (Zb2) into the first intermediate image (Zb1) via the beam deflection unit (30, 30A), wherein the second intermediate image (Zb2) is spatially curved, **characterized in that** some, or all, of the scan optical unit (35) is displaceable along an optical axis of the detection beam path such that the pose of the conjugate pupil relative to the first deflection unit can be set, wherein the image of the scan optical unit (35) has a magnification factor of between 0.8 and 1.2.

2. Light-scanning microscope (10) according to the preceding claim, wherein a centre of curvature of the second intermediate image (Zb2) lies in a beam deflection unit (30, 30A, 30B), in particular on a reflecting surface of the relevant beam deflection unit.

3. Light-scanning microscope (10) according to Claim 1 or 2, comprising an illumination optical unit (20, 36) for imaging the light distribution into an intermediate image, in particular into the second intermediate image (Zb2) or into a third or further intermediate image.

4. Light-scanning microscope (10) having an optical system defining a detection beam path and comprising the following components:
- a microscope objective (21) with a pupil plane (PE) and a focus,
- a scan optical unit (35) for creating a pupil plane (PE') conjugate to the pupil plane (PE) of the microscope objective (21),
- a variably settable beam deflection unit (30, 30A),
- an optoelectronic transducer (31, 32),
wherein the detection beam path images at least one point of the focus and at least one respective point of the transducer (31, 32) on one another, wherein the beam deflection unit (30, 30A) is arranged in the conjugate pupil plane (PE'), and an intermediate image (Zb1) lies optically between the microscope objective (21) and the scan optical unit (35), **and wherein** the scan optical unit (35) images the first intermediate image (Zb1) into a second intermediate image (Zb2) via the beam deflection unit (30, 30A), wherein the second intermediate image (Zb2) is spatially curved, **characterized in that** some, or all, of the scan optical unit (35) is displaceable along an optical axis of the detection beam path such that the pose of the conjugate pupil relative to the first deflection unit is set, wherein the image of the scan optical unit (35) has a magnification factor of between 0.8 and 1.2.

5. Light-scanning microscope (10) according to the preceding claim, wherein a centre of curvature of the second intermediate image (Zb2) lies in a beam deflection unit (30, 30A, 30B), in particular on a reflecting surface of the relevant beam deflection unit.

6. Light-scanning microscope (10) according to Claim 4 or 5, comprising a detection optical unit (36, 38) for imaging an intermediate image, in particular the second intermediate image (Zb2) or a third or further intermediate image, onto the transducer.

7. Light-scanning microscope (10) according to Claims 1 to 3 and Claims 4 to 6, wherein the optical system comprises a beam splitter (33) which is arranged in the illumination beam path and in the detection beam path in such a way that light coming from the focus is output coupled towards the optoelectronic transducer (31, 32) from the illumination beam path.

8. Light-scanning microscope (10) according to any of the preceding claims, wherein the second intermediate image is spherically curved or at least substantially spherically curved, in particular with a radius of curvature between the single focal length and twice the focal length of the scan optical unit.

9. Light-scanning microscope (10) according to any of the preceding claims, wherein the optical system [in the illumination beam path/detection beam path] comprises a collimation optical unit (36) providing a parallel beam path portion and situated on a side of the beam deflection unit (30, 30A) facing away from the scan optical unit (35) .

10. Light-scanning microscope (10) according to any of the preceding claims, wherein a concave mirror whose centre of curvature is located in the conjugate pupil plane (PE') is arranged optically between the beam deflection unit (30, 30A) and the light source (23) or transducer (32), in particular as collimation optical unit (36).

11. Light-scanning microscope (10) according to the preceding claim, wherein a radius of curvature of the concave mirror is twice the size of a radius of curvature of the second intermediate image.

12. Light-scanning microscope (10) according to any of the preceding claims, comprising an electric drive for displacing the displaceable part, or all, of the scan optical unit (35).

13. Light-scanning microscope (10) according to any of the preceding claims, wherein the image of the scan optical unit (35) has a magnification factor of between 0.9 and 1.1, in particular of exactly 1.

## Revendications

1. Microscope à balayage optique (10) comportant un système optique qui définit un trajet de faisceau d'éclairage et qui comprend les composants suivants :
- une source de lumière (22, 23, 24, 25, 26) qui assure une distribution de lumière spatialement limitée,
- un objectif de microscope (21) comprenant un plan pupillaire (PE) et un foyer,
- une optique de balayage (35) destinée à générer un plan pupillaire (PE') conjugué au plan pupillaire (PE) de l'objectif de microscope (21) et
- une unité de déviation de faisceau à réglage variable (30, 30A),
le trajet de faisceau d'éclairage reproduisant au moins un point de la distribution de lumière et au moins un point respectif du foyer l'un sur l'autre, l'unité de déviation de faisceau (30, 30A) étant disposée dans le plan pupillaire conjugué (PE') et une image intermédiaire (Zb1) étant située optiquement entre l'objectif de microscope (21) et l'optique de balayage (35), et l'optique de balayage (35) reproduisant une deuxième image intermédiaire (Zb2) dans la première image intermédiaire (Zb1) par le biais de l'unité de déviation de faisceau (30, 30A), la deuxième image intermédiaire (Zb2) étant incurvée dans l'espace, **caractérisé en ce qu'**une partie ou la totalité de l'optique de balayage (35) peut être déplacée le long d'un axe optique du trajet de faisceau de détection, de sorte que la position de la pupille conjuguée puisse être réglée par rapport à la première unité de déviation, la reproduction de l'optique de balayage (35) présentant un facteur de grossissement compris entre 0,8 et 1,2.

2. Microscope à balayage optique (10) selon la revendication précédente, un centre de courbure de la deuxième image intermédiaire (Zb2) étant situé dans une unité de déviation de faisceau (30, 30A, 30B), en particulier sur une surface réfléchissante de l'unité de déviation de faisceau correspondante.

3. Microscope à balayage optique (10) selon la revendication 1 ou 2, comprenant une optique d'éclairage (20, 36) destinée à reproduire la distribution de lumière dans une image intermédiaire, en particulier dans la deuxième image intermédiaire (Zb2) ou dans une troisième image intermédiaire ou une autre.

4. Microscope à balayage optique (10) comportant un système optique qui définit un trajet de faisceau d'éclairage et qui comprend les composants suivants :
- un objectif de microscope (21) comprenant un plan pupillaire (PE) et un foyer,
- une optique de balayage (35) destinée à générer un plan pupillaire (PE') conjugué au plan pupillaire (PE) de l'objectif de microscope (21) et
- une unité de déviation de faisceau à réglage variable (30, 30A),
- un convertisseur optoélectronique (31, 32),
le trajet de faisceau d'éclairage reproduisant au moins un point du foyer et au moins un point respectif du convertisseur (31, 32) l'un sur l'autre, l'unité de déviation de faisceau (30, 30A) étant disposée dans le plan pupillaire conjugué (PE') et une image intermédiaire (Zb1) étant située optiquement entre l'objectif de microscope (21) et l'optique de balayage (35), et l'optique de balayage (35) reproduisant la première image intermédiaire (Zb1) dans une deuxième image intermédiaire (Zb2) par le biais de l'unité de déviation de faisceau (30, 30A), la deuxième image intermédiaire (Zb2) étant incurvée dans l'espace, **caractérisé en ce qu'**une partie ou la totalité de l'optique de balayage (35) peut être déplacée le long d'un axe optique du trajet de faisceau de détection, de sorte que la position de la pupille conjuguée puisse être réglée par rapport à la première unité de déviation, la reproduction de l'optique de balayage (35) présentant un facteur de grossissement compris entre 0,8 et 1,2.

5. Microscope à balayage optique (10) selon la revendication précédente, un centre de courbure de la deuxième image intermédiaire (Zb2) étant situé dans une unité de déviation de faisceau (30, 30A, 30B), en particulier sur une surface réfléchissante de l'unité de déviation de faisceau correspondante.

6. Microscope à balayage optique (10) selon la revendication 4 ou 5, comprenant une optique de détection (36, 38) destinée à reproduire une image intermédiaire, en particulier la deuxième image intermédiaire (Zb2) ou une troisième image intermédiaire, ou une autre sur le convertisseur.

7. Microscope à balayage optique (10) selon les revendications 1 à 3 et les revendications 4 à 6,
le système optique comprenant un séparateur de faisceau (33) qui est disposé dans le trajet de faisceau d'éclairage et dans le trajet du faisceau de détection de telle sorte que la lumière sortant du foyer est délivrée par couplage en sortie du trajet de faisceau d'éclairage et amenée au convertisseur optoélectronique (31, 32).

8. Microscope à balayage optique (10) selon l'une des revendications précédentes, la deuxième image intermédiaire étant courbée sphériquement ou au moins de manière sensiblement sphérique, en particulier avec un rayon de courbure compris entre la distance focale simple et la distance focale doublée de l'optique de balayage.

9. Microscope à balayage optique (10) selon l'une des revendications précédentes, le système optique comprenant [dans le trajet de faisceau d'éclairage/trajet de faisceau de détection], sur un côté de l'unité de déviation de faisceau (30, 30A), une optique de collimation (36) qui est opposée à l'optique de balayage (35), qui fournit une section de trajet de faisceau parallèle.

10. Microscope à balayage optique (10) selon l'une des revendications précédentes, un miroir concave, dont le centre de courbure est situé dans le plan pupillaire conjugué (PE'), étant disposé optiquement entre l'unité de déviation de faisceau (30, 30A) et la source de lumière (23) ou le convertisseur (32), en particulier comme optique de collimation (36).

11. Microscope à balayage optique (10) selon la revendication précédente, le rayon de courbure du miroir concave étant deux fois supérieur au rayon de courbure de la deuxième image intermédiaire.

12. Microscope à balayage optique (10) selon l'une des revendications précédentes, comprenant un entraînement électrique destiné à déplacer la partie mobile ou l'ensemble de l'optique de balayage (35).

13. Microscope à balayage optique (10) selon l'une des revendications précédentes, la reproduction de l'optique de balayage (35) présentant un facteur de grossissement compris entre 0,9 et 1,1, en particulier de 1 exactement.
